# EUROPÄISCHE PATENTSCHRIFT

(11) **EP 4 255 785 B1**
(45) Veröffentlichungstag und Bekanntmachung des Hinweises auf die Patenterteilung: **04.12.2024**
(21) Anmeldenummer: 21794491.7
(22) Anmeldetag: 13.10.2021
(51) Int. Cl.: B60W 60/00, B60W 50/08

(54) **VERFAHREN ZUR STEUERUNG EINES AUTOMATISIERTEN FAHRBETRIEBES EINES FAHRZEUGES**
METHOD FOR CONTROLLING AN AUTOMATED DRIVING OPERATION OF A VEHICLE
PROCÉDÉ POUR COMMANDER UNE OPÉRATION DE CONDUITE AUTOMATISÉE D'UN VÉHICULE

(30) Priorität: 07.12.2020 DE 102020007437
(43) Veröffentlichungstag der Anmeldung: 11.10.2023
(73) Patentinhaber: Mercedes-Benz Group AG, 70372 Stuttgart (DE)
(72) Erfinder: KOLLER, Micha, 72124 Pliezhausen (DE); REHBORN, Hubert, 71069 Sindelfingen (DE); STARMAN, Frank, 71034 Böblingen (DE)
(74) Vertreter: Novagraaf Group
(86) Internationale Anmeldenummer: PCT/EP2021/078309
(87) Internationale Veröffentlichungsnummer: WO 2022/122225

(56) Entgegenhaltungen:
- EP-A1- 3 197 739
- DE-A1- 102011 082 375
- DE-A1- 102020 001 679
- US-A1- 2019 041 850

## Beschreibung

Die Erfindung betrifft ein Verfahren zur Steuerung eines automatisierten Fahrbetriebes eines Fahrzeuges.

Ein derartiges Verfahren ist beispielsweise aus der US 2019/041 850 A1 bekannt. Das Verfahren wird dabei bei einem Fahrzeug angewendet, das für den automatisierten Fahrbetrieb in mehreren Automatisierungsstufen eingerichtet ist, wobei der Betrieb in diesen Automatisierungsstufen in Abhängigkeit eines Autorisierungssignals, das von einer straßenseitigen Infrastruktureinrichtung empfangen wird, zugelassen oder gesperrt wird. Das Autorisierungssignal zeigt dabei Verkehrsstauungen, Wetterbedingungen, Unfälle, Baustellen etc. an.

Aus der DE 10 2014 014 120 A1 ist ein Verfahren zum autonomen Fahrbetrieb eines Fahrzeuges auf einer vorausliegenden Fahrstrecke bekannt. Dabei wird der autonome Fahrbetrieb nur dann zugelassen, wenn für eine vorgegebene Streckenlänge der vorausliegenden Fahrstrecke eine oder mehrere Bedingungen erfüllt ist bzw. sind. Dabei sind als Bedingungen vorgegeben, dass auf mindestens einer Seite einer aktuellen Fahrbahn des Fahrzeuges eine bauliche Trennung vorhanden ist, dass eine Fahrspur des Fahrzeuges eine Mindestspurbreite aufweist, dass keine die Reichweite von Umgebungserfassungssensoren wesentlich einschränkende Kuppen und Senken vorhanden sind, dass sich die Anzahl der Fahrspuren nicht ändert, dass kein Tunnel vorhanden ist, dass kein Gebäude auf der Fahrbahn vorhanden ist, dass ein Krümmungsradius der Fahrspur des Fahrzeuges größer ist als ein vorgegebener Grenzwert, dass keine Verkehrsstörung vorliegt, dass keine Verkehrsmeldung über Gefahrensituationen vorliegt und dass keine Verkehrsmeldung über das Vorhandensein von Baustellen vorliegt.

Aus der DE 10 2011 082 375 A1 ist ein Verfahren zur Steuerung eines automatisierten Fahrbetriebs eines Fahrzeugs bekannt, wobei vorgesehen ist, dass eine Steuerung die Führung des Fahrzeugs in Antwort auf eine Anfrage eines Fahrers übernimmt, wenn für eine festgelegte Fahrstrecke und/oder Zeitdauer vorgegebene Parameter erfüllt sind.

Aus der DE 10 2020 001 679 A1 ist Verfahren zur Präzisierung und Verbesserung von Verkehrsinformationen eines Verkehrsdienstes bekannt. Dabei ist vorgesehen, dass dem Verkehrsdienst eine von einem Fahrzeug automatisiert abgesetzte Notrufinformation ohne Mitteilung einer Fahrzeug-Identifizierungsnummer übermittelt wird und dass andere Fahrzeuge, die sich einem Ort der abgesetzten Notrufinformation nähern, in Abhängigkeit der Notrufinformation vom Verkehrsdienst mittels einer entsprechenden Verkehrsinformation gewarnt werden.

Der Erfindung liegt die Aufgabe zugrunde, ein Verfahren zur Steuerung eines automatisierten Fahrbetriebes eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Steuerung eines automatisierten Fahrbetriebes eines Fahrzeuges, wobei der automatisierte Fahrbetrieb in Abhängigkeit einer Anzahl vorgegebener Bedingungen zugelassen wird, sieht erfindungsgemäß vor, dass Verkehrsinformationen und Ereignisinformationen von dem Fahrzeug empfangen werden, wobei die Verkehrsinformation orts- und zeitreferenzierte Informationen über einen Stau auf einem dem Fahrzeug vorausliegenden Streckenabschnitt und die Ereignisinformation orts- und zeitreferenzierte Informationen über ein Ereignis auf dem vorausliegenden Streckenabschnitt enthalten. Bei dem Ereignis handelt es sich vorzugsweise um ein sicherheitskritisches Ereignis, beispielsweise um einen Gegenstand auf der Straße, insbesondere ein Pannenfahrzeug oder verunfalltes Fahrzeug, das für das Fahrzeug oder andere Verkehrsteilnehmer am Ort des Ereignisses eine potentielle Gefahr darstellt. Die Verkehrsinformation und die Ereignisinformation werden von dem Fahrzeug als zusammengehörig bewertet, wenn diese ortsnah und zeitnah vorliegen, d. h. für denselben Ort und dieselbe Zeit gelten oder wenn zumindest eine Entfernung des Ortes, für welchen die Verkehrsinformation gilt, vom Ort, für welchen die Ereignisinformation gilt, einen vorgegebenen Entfernungsgrenzwert unterschreitet und ein zeitlicher Abstand der Zeit, für welche die Verkehrsinformation gilt, von der Zeit, für welche die Ereignisinformation gilt, einen vorgegebenen Zeitabstandsgrenzwert unterschreitet. Der automatisierte Fahrbetrieb des Fahrzeuges wird nicht zugelassen, wenn für einen vorgegebenen Vorausschauhorizont eine Ereignisinformation und eine Verkehrsinformation vorliegen, aber nur dann, wenn diese als nicht zusammengehörig bewertet werden. Das heißt, wenn die vorliegende Ereignisinformation und Verkehrsinformation als zusammengehörig bewertet werden, soll deren Vorliegen nicht zur einer Nichtzulassung des automatisierten Fahrbetriebs führen.

Vorzugsweise wird der automatisierte Fahrbetrieb auch dann nicht zugelassen, wenn für den vorgegebenen Vorausschauhorizont eine Ereignisinformation vorliegt, aber keine Verkehrsinformation vorliegt.

Bei Nichtzulassung des automatisierten Fahrbetriebs, wird der automatisierte Fahrbetrieb vorzugsweise für eine Aktivierung gesperrt, falls er deaktiviert ist, bzw. beendet und für die Aktivierung gesperrt, falls er bereits aktiviert ist. Bei Nichtzulassung des automatisierten Fahrbetrieb wird einem Fahrzeugnutzer somit die Möglichkeit genommen, den automatisierten Fahrbetrieb zu aktivieren bzw. fortzusetzen.

Durch Anwendung des Verfahrens wird der automatisierte Fahrbetrieb dem Fahrzeugnutzer fahrzeugseitig nur dann angeboten, wenn vergleichsweise wenige störende äußere Einflüsse, insbesondere Ereignisse, auf dem vorausliegenden Streckenabschnitt zu erwarten sind.

Das Verfahren sieht vor, dass die Verkehrsinformationen und die Ereignisinformationen dem Fahrzeug über einen Verkehrsdienst als Informationsquelle zur Verfügung gestellt werden, wobei ein Verkehrsereignis mit orts- und zeitreferenzierten Kriterien in dem Fahrzeug kombiniert werden, um einen automatisierten Fahrbetrieb anzubieten, zu verbieten, zu beenden oder auszuführen.

Insbesondere wird der automatisierte Fahrbetrieb zugelassen, wenn als Verkehrsinformation ein Stau auf dem vorausliegenden Streckenabschnitt von dem Fahrzeug empfangen wird, wohingegen bei Vorliegen eines Verkehrsereignisses ohne Stau als Verkehrsinformation der automatisierte Fahrbetrieb nicht zugelassen oder eine Übernahmeaufforderung an den Fahrzeugnutzer zur Ausführung einer Fahraufgabe ausgegeben wird. Ein Verkehrsereignis, z. B. Gegenstände auf einer Fahrbahn, kann dem Fahrzeug im automatisierten Fahrbetrieb, ohne dass ein Verkehrszustand Stau vorherrscht, Probleme bereiten. Ohne den Verkehrszustand Stau ist ein solches Verkehrsereignis vergleichsweise gefährlich für das Fahrzeug, wobei dieses Verkehrsereignis bei vergleichsweise langsamer Fahrt des Fahrzeuges in einem sich bewegenden Stau eher unproblematisch ist.

Wird also ermittelt, dass eine fahrzeugseitig empfangene Verkehrsinformation, insbesondere eine Stauinformation, nicht mit einem gemeldeten Verkehrsereignis zusammenhängt, dann wird der automatisierte Fahrbetrieb des Fahrzeuges beendet.

Das Verfahren stellt einen sogenannten Staupiloten dar, so dass ein Komfort für den Fahrzeugnutzer bei einer Staufahrt des Fahrzeuges, sofern der automatisierte Fahrbetrieb zugelassen wird, erheblich gesteigert werden kann.

In einer Ausführung des Verfahrens wird der automatisierte Fahrbetrieb des Fahrzeuges nicht zugelassen oder beendet, wenn eine momentane Fahrgeschwindigkeit des Fahrzeuges eine vorgegebene Geschwindigkeitsobergrenze überschreitet. Dabei ist die Geschwindigkeitsobergrenze in Bezug auf Fahrgeschwindigkeiten im Verkehrszustand Stau vorgegeben, um eine Sicherheit für das Fahrzeug sicherstellen zu können, wobei bei einer die vorgegebene Geschwindigkeitsobergrenze überschreitenden Fahrgeschwindigkeit auf allen in dieselbe Richtung verlaufenden Fahrspuren, der automatisierte Fahrbetrieb nicht zugelassen wird. Der Fahrzeugnutzer kann den automatisierten Fahrbetrieb bei auf dem Streckenabschnitt vorherrschendem Stau also nur dann nutzen, wenn eine Verkehrsflussgeschwindigkeit zumindest auf einer Fahrspur die vorgegebene Geschwindigkeitsobergrenze unterschreitet, wobei sich das Fahrzeug auf dieser Fahrspur einordnet. Beispielsweise beträgt die Geschwindigkeitsobergrenze 60 km/h.

Eine weitere Ausführung sieht vor, dass der automatisierte Fahrbetrieb des Fahrzeuges nicht zugelassen wird, wenn eine momentane Fahrgeschwindigkeit des Fahrzeuges eine vorgegebene Geschwindigkeitsobergrenze unterschreitet, die aber innerhalb einer vorgebbaren Zeitdauer erreicht wird.

Wird ermittelt, dass sich der Verkehrszustand Stau innerhalb der vorgegebenen Zeitdauer auflöst und somit die Fahrgeschwindigkeit des Fahrzeuges die vorgegebene Geschwindigkeitsobergrenze überschreiten, da dann ein Verkehrszustand freier Verkehr vorherrscht, so wird der automatisierte Fahrbetrieb nicht zugelassen, da das Fahrzeug im automatisierten Fahrbetrieb, in welchem das Fahrzeug eine Fahrgeschwindigkeit bis zu der vorgegebenen Geschwindigkeitsobergrenze aufweisen kann, ansonsten ein Verkehrshindernis für nachfolgende Fahrzeuge auf der Fahrspur des Fahrzeuges darstellt.

Im Fall, dass ein Verkehr auf einem mehrspurigen Streckenabschnitt auf einer Fahrspur oder auf mehreren Fahrspuren mit einer momentanen Fahrgeschwindigkeit fließt, die die vorgegebene Geschwindigkeitsobergrenze unterschreitet, dann ordnet sich das Fahrzeug in einer Weiterbildung des Verfahrens auf dieser Fahrspur bzw. auf einer dieser Fahrspuren ein, auf welcher die Geschwindigkeitsobergrenze unterschritten wird. Das Fahrzeug ordnet sich also auf einer Fahrspur ein, auf welcher mit einer Fahrgeschwindigkeit gefahren wird, die die vorgegebene Geschwindigkeitsobergrenze unterschreitet, so dass das Fahrzeug nicht als Verkehrshindernis für schneller fahrende Fahrzeuge gilt.

Eine weitere mögliche Ausführung des Verfahrens sieht vor, dass sich das Fahrzeug auf einer der Fahrspuren einordnet, auf welcher der Verkehr mit einer momentanen Fahrgeschwindigkeit fließt, deren Differenz zu der Geschwindigkeitsobergrenze am geringsten ist. Das Fahrzeug wechselt also nicht automatisch auf die Fahrspur, auf welcher mit der niedrigsten Fahrgeschwindigkeit gefahren wird, sondern auf die Fahrspur, deren Fahrgeschwindigkeit am höchsten ist, aber die Geschwindigkeitsobergrenze unterschreitet. Somit kann weitestgehend sichergestellt werden, dass das Fahrzeug im automatisierten Fahrbetrieb in einem breiten sich bewegenden Stau dennoch vergleichsweise zügig vorankommt, um sein Ziel zu erreichen.

In einer möglichen Weiterbildung wird bei einer während des automatisierten Fahrbetriebes getroffenen Entscheidung einer Nichtzulassung des automatisierten Fahrbetriebes eine Fahraufgabe nach Ausgabe einer Übernahmeaufforderung an einen Fahrzeugnutzer übergeben. Sobald der Fahrzeugnutzer, beispielsweise ein Lenkrad mit beiden Händen betätigt, wird der automatisierte Fahrbetrieb beendet, so dass der Fahrzeugnutzer die Fahraufgabe ausführt und das Fahrzeug im manuellen Fahrbetrieb bewegt wird.

Ausführungsbeispiele der Erfindung werden im Folgenden anhand einer Zeichnung näher erläutert.

Dabei zeigt die:

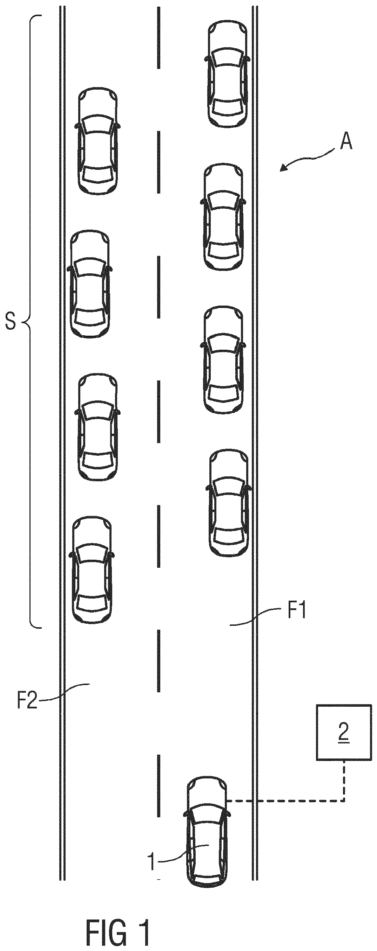

- Fig. 1: schematisch ein Fahrzeug auf einem mehrspurigen Streckenabschnitt und ein Verkehrsdienst.

Die einzige Figur zeigt einen Streckenabschnitt A, insbesondere einer Autobahn, mit zwei in dieselbe Richtung verlaufenden Fahrspuren F1, F2, wobei ein Fahrzeug 1 auf einer rechten Fahrspur F1 fährt und sich auf einen Stau S zubewegt. Das Fahrzeug 1 ist über eine drahtlose Datenverbindung mit einem Verkehrsdienst 2 verbunden.

Das Fahrzeug 1 verfügt über ein Assistenzsystem zum automatisierten Fahrbetrieb, in welchem eine Fahraufgabe vollumfänglich von dem Fahrzeug 1 selbst ausgeführt wird, so dass ein Fahrzeugnutzer des Fahrzeuges 1 beispielsweise einer anderen Tätigkeit nachgehen kann.

Um zu ermöglichen, dass der automatisierte Fahrbetrieb des Fahrzeuges 1 dem Fahrzeugnutzer fahrzeugseitig nur dann angeboten wird, wenn möglichst vergleichsweise wenig störende Einflüsse auf dem vorausliegenden Streckenabschnitt A zu erwarten sind, ist ein im Folgenden beschriebenes Verfahren vorgesehen.

Insbesondere sieht das Verfahren vor, dass über einen Verkehrsdienst 2 als Informationsquelle bezogene Verkehrsereignisse mit orts- und zeitreferenzierten Kriterien kombiniert werden, um den automatisierten Fahrbetrieb anzubieten und zuzulassen, nicht zuzulassen, zu beenden oder auszuführen.

Das Fahrzeug 1 weist hierzu eine Steuereinheit auf, die dazu ausgebildet ist, Verkehrsinformationen und Ereignisinformationen des Verkehrsdienstes 2 zu empfangen, wobei der automatisierte Fahrbetrieb des Fahrzeuges 1 auch bei einem vorliegenden Verkehrszustand Stau S ausgeführt werden kann.

Das im Folgenden beschriebene Verfahren stellt einen sogenannten Staupiloten, also ein Stauassistenzprogramm, für das Fahrzeug 1 dar, wobei das Fahrzeug 1 im automatisierten Fahrbetrieb mit einer Fahrgeschwindigkeit bis zu einer vorgegebenen Geschwindigkeitsobergrenze, von z. B. 60 km/h, bewegt werden kann.

Die von dem Fahrzeug 1 empfangenen Verkehrsinformationen enthalten orts- und zeitreferenzierte Informationen über Staus S auf dem dem Fahrzeug 1 vorausliegenden Streckenabschnitt A, wobei die Ereignisinformationen Informationen über Ereignisse auf dem Streckenabschnitt A enthalten.

Die Steuereinheit empfängt Informationen des Verkehrsdienstes 2, beispielsweise eines Navigationssystems des Fahrzeuges 1, und entscheidet daraufhin, ob der automatisierte Fahrbetrieb möglich ist.

Diese Informationen des Verkehrsdienstes 2 können z. B. auf einer Autobahn in jeder beliebigen, auch zeitlich verschiedenen, Kombinationen vorliegen. Dabei wird zwischen einer Verkehrsinformation ohne Ereignisinformation, einer Ereignisinformation ohne Verkehrsinformation, einer Ereignisinformation nahe einer Verkehrsinformation, d. h. nahe eines Verkehrszustandes, einer Ereignisinformation hinter einer Verkehrsinformation, d. h. hinter einem Verkehrszustand, etc. unterschieden.

Insbesondere wird der automatisierte Fahrbetrieb des Fahrzeuges 1 nicht zugelassen, wenn in einer bestimmten zeitlich-räumlichen Entfernung zu dem Fahrzeug 1 ein bestimmtes Verkehrsereignis, also eine Ereignisinformation, beispielsweise dass sich Gegenstände auf einer Fahrbahn befinden, vorliegt.

Empfängt das Fahrzeug 1 eine derartige Ereignisinformation, kann es sich um eine Situation handeln, die das Fahrzeug 1 im automatisierten Fahrbetrieb nicht bewältigen kann und die somit für das Fahrzeug 1 gefährlich sein kann, so dass der automatisierte Fahrbetrieb bei Empfang einer solchen Ereignisinformation von vornherein nicht angeboten und auch nicht zugelassen wird.

Demgegenüber wird der automatisierte Fahrbetrieb des Fahrzeuges 1 zugelassen, wenn eine solche Ereignisinformation innerhalb einer parametrierbaren räumlich-zeitlichen Entfernung zu dem Fahrzeug 1 in Verbindung mit einer Verkehrsinformation in Bezug auf einen Verkehrszustand Stau S vorliegt. Dabei wird mittels der Ereignisinformation eine Ursache der Verkehrsinformation Stau S erläutert, wobei das Fahrzeug 1 in dem Stau S automatisiert bewegt werden kann. Im Stau S, d. h. im automatisierten Fahrbetrieb mit vergleichsweise geringer Fahrgeschwindigkeit, stellt das in Form der Ereignisinformation an das Fahrzeug 1 übermittelte Verkehrsereignis keine problematische Situation dar.

Erhält das Fahrzeug 1 also die Ereignisinformation "Gegenstände auf der Fahrbahn" und es liegt keine weitere Verkehrsinformation zu dieser Ereignisinformation vor, dann wird der automatisierte Fahrbetrieb ab dem Erhalt dieser Ereignisinformation nicht zugelassen, so dass der Fahrzeugnutzer den automatisierten Fahrbetrieb nicht aktivieren kann.

Ist der automatisierte Fahrbetrieb bei Empfang dieser Verkehrsinformation aktiviert, wird eine Übernahmeanforderung an den Fahrzeugnutzer ausgegeben, so dass dieser die Fahraufgabe des Fahrzeuges 1 übernimmt und ausführt.

Empfängt die Steuereinheit hingegen die Ereignisinformation "Gegenstände auf der Fahrbahn" und zudem wird eine zugehörige Verkehrsinformation, insbesondere in Bezug auf den vorherrschenden Verkehrszustand wegen des Verkehrsereignisses, an das Fahrzeug 1 übermittelt, dann wird der automatisierte Fahrbetrieb des Fahrzeuges 1 weiterhin zugelassen, weil eine Stausituation als Verkehrsinformation unabhängig von einer Stauursache, also unabhängig von der Ereignisinformation, von dem im automatisierten Fahrbetrieb fahrenden Fahrzeug 1 bewältigt werden kann.

Fährt das Fahrzeug 1 im automatisierten Fahrbetrieb im Stau S auf ein Hindernis auf der Fahrbahn zu, das Verkehrsereignis, aufgrund dessen Stau S vorherrscht, kann es sein, dass sich das Hindernis auf einer linken Fahrspur F2 befindet oder das Fahrzeug 1 bei angemessener Fahrgeschwindigkeit einen Spurwechsel von der rechten Fahrspur F1 auf die linke Fahrspur F2 durchführt, um dem Hindernis auszuweichen.

Der automatisierte Fahrbetrieb des Fahrzeuges 1 bei Anwendung des Verfahrens wird immer zugelassen, wenn als Verkehrsinformation der Verkehrszustand Stau S unabhängig von der Ereignisinformation vorliegt.

Liegt kein Stau S als Verkehrsinformation vor und das Fahrzeug 1 empfängt ein Verkehrsereignis, wird eine Übernahmeanforderung an den Fahrzeugnutzer ausgegeben und der automatisierte Fahrbetrieb deaktiviert.

Weitere mögliche Verkehrsereignisse, bei deren Vorliegen der automatisierte Fahrbetrieb nicht zugelassen oder deaktiviert wird, sind beispielsweise: Unfälle, Baustellen, Spurverengungen, Unpassierbarkeiten, eine glatte Fahrbahn, Aquaplaning, Feuer auf der Fahrbahn, Tiere auf der Fahrbahn etc.

Bei Empfang einer Verkehrsinformation und einer Ereignisinformation wird fahrzeugseitig bewertet, ob diese zusammengehören. Dies wird insbesondere vermutet, wenn das Verkehrsereignis und der Verkehrszustand orts- und zeitreferenziert vergleichsweise nah beieinanderliegen.

Im Fall, dass bei einer vergleichsweise geringen Entfernung und einer zeitlichen Latenz zwischen der Verkehrsinformation und der Ereignisinformation eine Zusammengehörigkeit angenommen werden kann, kann die Ereignisinformation für eine Entscheidung der Zulässigkeit des automatisierten Fahrbetriebes vernachlässigt werden. Dadurch ist es möglich, den automatisierten Fahrbetrieb öfter zu nutzen, als wenn die Entscheidung ereignisabhängig getroffen wird und bei jedem Verkehrsereignis eine Übernahmeaufforderung an den Fahrzeugnutzer des Fahrzeuges 1 ausgegeben wird.

Wird ermittelt, dass die Verkehrsinformation, insbesondere in Bezug auf den Verkehrszustand, und die Ereignisinformation nicht zusammengehören, werden sowohl die Verkehrsinformation als auch die Ereignisinformation berücksichtigt.

Das Fahrzeug 1 kann den Stau S im automatisierten Fahrbetrieb zwar bewältigen, aber das Verkehrsereignis nicht, so dass der automatisierte Fahrbetrieb beendet wird.

Mit anderen Worten: Wenn ermittelt wird, dass die vorliegende Verkehrsinformation und die vorliegende Ereignisinformation, insbesondere aufgrund der zeitlich-räumlichen Distanz, als nicht zusammengehörig angesehen werden können, wird der automatisierte Fahrbetrieb des Fahrzeuges 1 beendet.

Eine Zusammengehörigkeit von Verkehrsinformationen und Ereignisinformationen kann, z. B. in Abhängigkeit von einer Informationsgüte, parametriert werden.

Beispielsweise werden eine empfangene Verkehrsinformation und eine empfangene Ereignisinformation als zusammengehörig angesehen, wenn zwischen der Verkehrsinformation, insbesondere dem Verkehrszustand, und dem Verkehrsereignis, beispielsweise ein Unfall, ein Abstand von 2 km liegt.

Wie oben erwähnt, ist eine Geschwindigkeitsgrenze für den automatisierten Fahrbetrieb des Fahrzeuges 1 von beispielsweise 60 km/h vorgegeben.

Im Fall, dass die Verkehrsinformation umfasst, dass in dem Stau S als Verkehrszustand beispielsweise mit einer Fahrgeschwindigkeit von 0 km/h bis 85 km/h gefahren werden kann, so kann das Fahrzeug 1, wenn dieses im automatisierten Fahrbetrieb mit einer maximalen Fahrgeschwindigkeit von 60 km/h fährt, ein Verkehrshindernis, insbesondere für einen nachfolgenden Verkehr, darstellen.

Um in einer solchen Situation weitestgehend ausschließen zu können, dass das Fahrzeug 1 im automatisierten Fahrbetrieb ein Verkehrshindernis bildet, ordnet sich das Fahrzeug 1, wenn es die vorgegebene Geschwindigkeitsobergrenze erreicht oder innerhalb einer vorgebbaren Zeitdauer voraussichtlich erreichen wird, auf einer der Fahrspuren F1, F2 ein, auf welcher ein Verkehr mit einer Fahrgeschwindigkeit fließt, die die vorgegebene Geschwindigkeitsobergrenze unterschreitet.

Fährt das Fahrzeug 1 auf einem dreispurigen Streckenabschnitt A und auf der rechten Fahrspur F1 fließt der Verkehr mit einer momentanen Fahrgeschwindigkeit von 10 km/h, auf einer nicht gezeigten mittleren Fahrspur von 30 km/h und auf einer linken Fahrspur F2 von 60 km/h, so sieht eine Ausführung des Verfahrens vor, dass sich das Fahrzeug 1 auch auf der linken Fahrspur F2 einordnen kann, da die Fahrgeschwindigkeit von 60 km/h der vorgegebenen Geschwindigkeitsobergrenze entspricht.

Das Fahrzeug 1 ordnet sich also auf der Fahrspur F1, F2 ein, deren Fahrgeschwindigkeit die vorgegebene Geschwindigkeitsobergrenze nicht überschreitet. Insbesondere ordnet sich das Fahrzeug 1 auf der Fahrspur F1, F2 mit der höchsten, die Geschwindigkeitsobergrenze dennoch unterschreitenden Fahrgeschwindigkeit ein, so dass ein Zeitverzug des Fahrzeuges 1 aufgrund des Staues S verringert werden kann.

Fährt das Fahrzeug 1 auf einer Fahrspur F1, F2, auf welcher der Verkehr mit einer Fahrgeschwindigkeit fließt, die die vorgegebene Geschwindigkeitsobergrenze überschreitet, dann führt das Fahrzeug 1 einen Spurwechsel auf eine Fahrspur F1, F2 mit einer die vorgegebene Geschwindigkeitsobergrenze unterschreitenden Fahrgeschwindigkeit durch oder im Fall, dass keine solche Fahrgeschwindigkeit gefahren wird, wird eine Übernahmeaufforderung an den Fahrzeugnutzer ausgegeben und der automatisierte Fahrbetrieb wird beendet.

Weiterhin sieht das Verfahren vor, dass der automatisierte Fahrbetrieb des Fahrzeuges 1 bei einem sich auflösenden Stau S, bei sogenannter fallender Tendenz, nicht zugelassen wird und in einem zunehmenden Stau S, bei sogenannter steigender Tendenz, zugelassen wird.

Dabei wird der automatisierte Fahrbetrieb des Fahrzeuges 1 nicht zugelassen, da die Fahrgeschwindigkeit des Fahrzeuges 1 durch die vorgegebene Geschwindigkeitsobergrenze beschränkt ist.

Da weitestgehend ausgeschlossen werden soll, dass das Fahrzeug 1 durch die mittels der Geschwindigkeitsobergrenze beschränkte Fahrgeschwindigkeit im automatisierten Fahrbetrieb ein Verkehrshindernis für den nachfolgenden Verkehr darstellt, wird der automatisierte Fahrbetrieb des Fahrzeuges 1 nur dann bei Auflösung des Staues S weiterhin zugelassen oder ist möglich, wenn das Fahrzeug 1, beispielsweise aufgrund einer Geschwindigkeitsbegrenzung oder weil das Fahrzeug 1 z. B. hinter einem vergleichsweise langsam fahrenden Nutzfahrzeug, beispielsweise einem Lastkraftwagen hinterherfährt, mit einer Fahrgeschwindigkeit unterhalb der vorgegebenen Geschwindigkeitsobergrenze weiterfährt.

Das im automatisierten Fahrbetrieb fahrende Fahrzeug 1 fährt also im fließenden Verkehr mit, sofern die Fahrgeschwindigkeit die vorgegebene Geschwindigkeitsobergrenze unterschreitet. Überschreitet die momentane Fahrgeschwindigkeit die vorgegebene Geschwindigkeitsobergrenze wird eine Übernahmeaufforderung an den Fahrzeugnutzer ausgegeben.

Löst sich der Stau S innerhalb einer vergleichsweise kurzen Zeitdauer auf, beispielsweise in 5 Minuten, wird der automatisierte Fahrbetrieb des Fahrzeuges 1 nicht zugelassen, da dieser nur relativ kurz inklusive einer Übergabe- und Übernahmezeit in Anspruch genommen werden kann.

Dass sich der Verkehrszustand Stau S in einer entsprechenden Zeitdauer auflöst, kann im Wesentlichen aus einer fahrzeugseitig empfangenen Verkehrsinformation abgeleitet werden.

Das Verfahren impliziert also Verhaltensregeln für das Fahrzeug 1, so dass der automatisierte Fahrbetrieb des Fahrzeuges 1 prinzipiell bei einer Staumeldung als Verkehrsinformation zulässig ist, ohne dass eine Ereignisinformation berücksichtigt wird. Die jeweilige Verhaltensregel für die orts- und zeitreferenzierte Kombination von Verkehrsinformation und Ereignisinformation für die Steuereinheit wird mittels einer nicht näher dargestellten zentralen Rechnereinheit, mit der das Fahrzeug 1, insbesondere die Steuereinheit, fortlaufend verbunden ist, verwaltet, gespeichert und angepasst.

Der automatisierte Fahrbetrieb wird hingegen nicht zugelassen, wenn ausschließlich eine Ereignisinformation ohne Staumeldung als Verkehrsinformation vorliegt.

Die Geschwindigkeitsobergrenze, bis zu welcher der automatisierte Fahrbetrieb im Verkehrszustand Stau S zugelassen wird, kann fahrzeugspezifisch und orts- sowie zeitreferenziert mittels einer nicht näher dargestellten zentralen Rechnereinheit, mit der das Fahrzeug 1, insbesondere die Steuereinheit, fortlaufen verbunden ist, vorgegeben und an das Fahrzeug 1 übermittelt werden.

In Abhängigkeit einer jeweils dem Fahrzeug 1 vorliegenden Ereignisinformation werden Verhaltensregeln des Fahrzeuges 1 angepasst. So vergrößert sich ein einzuhaltender Mindestabstand zwischen dem Fahrzeug 1 und dem vorausfahrenden Verkehr, wenn als Ereignisinformation übermittelt wurde, dass sich Gegenstände auf der Fahrbahn befinden.

Auch vergrößert sich der Mindestabstand und eine Verringerung der Fahrgeschwindigkeit des Fahrzeuges 1 wird veranlasst bei Aquaplaning, Starkregen etc. als Ereignisinformation.

Eine Abbildungsvorschrift legt dabei das jeweilige Verkehrsereignis, einen orts- und zeitreferenzierten Abstand zu einer Stauinformation, d. h. zu einer Staumeldung, insbesondere zu einer Verkehrsinformation in Bezug auf einen Verkehrszustand, und eine jeweilige Konsequenz für den automatisierten Fahrbetrieb des Fahrzeuges 1 fest.

## Patentansprüche

1. Verfahren zur Steuerung eines automatisierten Fahrbetriebes eines Fahrzeuges (1), wobei
- der automatisierte Fahrbetrieb in Abhängigkeit einer Anzahl vorgegebener Bedingungen zugelassen wird,
- Verkehrsinformationen und Ereignisinformationen von dem Fahrzeug (1) empfangen werden,
- die Verkehrsinformation orts- und zeitreferenzierte Informationen über einen Stau (S) auf einem dem Fahrzeug (1) vorausliegenden Streckenabschnitt (A) und die Ereignisinformation orts- und zeitreferenzierte Informationen über ein Ereignis auf dem vorausliegenden Streckenabschnitt (A) enthalten,
**dadurch gekennzeichnet dass**
- die Verkehrsinformation und die Ereignisinformation von dem Fahrzeug (1) als zusammengehörig bewertet werden, wenn diese ortsnah und zeitnah vorliegen,
- der automatisierte Fahrbetrieb des Fahrzeuges (1) nicht zugelassen wird, wenn für einen vorgegebenen Vorausschauhorizont eine Ereignisinformation und eine Verkehrsinformation vorliegen, aber nur dann, wenn diese als nicht zusammengehörig bewertet werden.

2. Verfahren nach Anspruch 1,
**dadurch gekennzeichnet, dass**
der automatisierte Fahrbetrieb des Fahrzeuges (1) nicht zugelassen wird, wenn für den vorgegebenen Vorausschauhorizont eine Ereignisinformation vorliegt, aber keine Verkehrsinformation vorliegt.

3. Verfahren nach einem der vorhergehenden Ansprüche,
**dadurch gekennzeichnet, dass**
der automatisierte Fahrbetrieb des Fahrzeuges (1) nicht zugelassen wird, wenn eine momentane Fahrgeschwindigkeit des Fahrzeuges (1) eine vorgegebene Geschwindigkeitsobergrenze überschreitet.

4. Verfahren nach einem der vorhergehenden Ansprüche,
**dadurch gekennzeichnet, dass**
der automatisierte Fahrbetrieb des Fahrzeuges (1) nicht zugelassen wird, wenn eine momentane Fahrgeschwindigkeit des Fahrzeuges (1) eine vorgegebene Geschwindigkeitsobergrenze unterschreitet, diese aber innerhalb einer vorgebbaren Zeitdauer erreicht wird.

5. Verfahren nach Anspruch 3 oder 4,
**dadurch gekennzeichnet, dass**
im Fall, dass ein Verkehr auf einem mehrspurigen Streckenabschnitt (A) auf einer Fahrspur (F1, F2) oder auf mehreren Fahrspuren (F1, F2) mit einer momentanen Fahrgeschwindigkeit fließt, die die vorgegebene Geschwindigkeitsobergrenze unterschreitet, sich das Fahrzeug (1) auf dieser Fahrspur (F1, F2) bzw. auf einer dieser Fahrspuren (F1, F2) einordnet.

6. Verfahren nach Anspruch 5,
**dadurch gekennzeichnet, dass**
sich das Fahrzeug (1) auf einer der Fahrspuren (F1, F2) einordnet, auf welcher der Verkehr mit einer momentanen Fahrgeschwindigkeit fließt, deren Differenz zu der Geschwindigkeitsobergrenze am geringsten ist.

7. Verfahren nach einem der vorhergehenden Ansprüche,
**dadurch gekennzeichnet, dass**
bei einer während des automatisierten Fahrbetriebes getroffenen Entscheidung einer Nichtzulassung des automatisierten Fahrbetriebes eine Fahraufgabe nach Ausgabe einer Übernahmeaufforderung an einen Fahrzeugnutzer übergeben wird.

8. Verfahren nach einem der vorhergehenden Ansprüche,
**dadurch gekennzeichnet, dass**
die Nichtzulassung des automatisierten Fahrbetriebs zur Folge hat, dass der der automatisierte Fahrbetrieb für eine Aktivierung gesperrt wird, falls er deaktiviert ist, bzw. beendet wird und für die Aktivierung gesperrt wird, falls er aktiviert ist.

9. Verfahren nach einem der vorhergehenden Ansprüche,
**dadurch gekennzeichnet, dass**
die Ereignisinformation sich auf ein Ereignis bezieht, das für das Fahrzeug (1) oder andere Verkehrsteilnehmer eine potentielle Gefahr darstellt.

## Claims

1. Method for controlling an automated driving operation of a vehicle (1), wherein
- the automated driving operation is authorized depending on a number of prespecified conditions,
- traffic information and event information are received by the vehicle (1),
- the traffic information contains location- and time-referenced information about a traffic jam (S) on a portion of road (A) ahead of the vehicle (1), and the event information contains location- and time-referenced information about an event on the portion of road (A) ahead,
**characterized in that**
- the traffic information and the event information are assessed by the vehicle (1) as related if they are close together in space and time,
- the automated driving operation of the vehicle (1) is not authorized if event information and traffic information are available for a specified prediction horizon, but only if these are assessed as not related.

2. Method according to claim 1,
**characterized in that**
the automated driving operation of the vehicle (1) is not authorized if event information is available for the specified prediction horizon but no traffic information is available.

3. Method according to either of the preceding claims,
**characterized in that**
the automated driving operation of the vehicle (1) is not authorized if a current driving speed of the vehicle (1) exceeds a prespecified upper speed limit.

4. Method according to any of the preceding claims,
**characterized in that**
the automated driving operation of the vehicle (1) is not authorized if a current driving speed of the vehicle (1) is below a specified upper speed limit, but this is reached within a predetermined period of time.

5. Method according to either claim 3 or claim 4,
**characterized in that**
in the case that traffic on a multi-lane road portion (A) is flowing on one lane (F1, F2) or on a plurality of lanes (F1, F2) at a current driving speed which is below the prespecified upper speed limit, the vehicle (1) positions itself on this lane (F1, F2) or on one of these lanes (F1, F2), respectively.

6. Method according to claim 5,
**characterized in that**
the vehicle (1) positions itself on one of the lanes (F1, F2) on which the traffic is flowing at a current driving speed that has the smallest difference to the upper speed limit.

7. Method according to any of the preceding claims,
**characterized in that**
if a decision is made during automated driving operation to not to authorize the automated driving operation, a driving task is transferred to a vehicle user after a takeover request has been issued.

8. Method according to any of the preceding claims,
**characterized in that**
non-authorization of the automated driving operation results in the automated driving operation being blocked from activation if it is deactivated or being terminated and blocked from activation if it is activated.

9. Method according to any of the preceding claims,
**characterized in that**
the event information relates to an event that poses a potential danger to the vehicle (1) or other road users.

## Revendications

1. Procédé pour la commande d'un mode de conduite automatisé d'un véhicule (1), dans lequel
- le mode de conduite automatisé est autorisé en fonction d'un certain nombre de conditions prédéfinies,
- des informations de trafic et des informations d'évènement sont reçues par le véhicule (1),
- l'information de trafic contient des informations référencées en termes de lieu et de temps concernant un embouteillage (S) sur un tronçon de route (A) précédant le véhicule (1) et l'information d'évènement contient des informations référencées en termes de lieu et de temps concernant un événement sur le tronçon de route (A) précédent,
**caractérisé en ce que**
- l'information de trafic et l'information d'évènement sont évaluées par le véhicule (1) comme allant de pair si elles sont présentes de manière proche en termes de temps et proche en termes de lieu,
- le mode de conduite automatisé du véhicule (1) n'est pas autorisé si, pour un horizon prévisionnel prédéfini, une information d'évènement et une information de trafic sont présentes, mais uniquement si elles sont évaluées comme n'allant pas de pair.

2. Procédé selon la revendication 1,
**caractérisé en ce que**
le mode de conduite automatisé du véhicule (1) n'est pas autorisé si, pour l'horizon prévisionnel prédéfini, une information d'évènement est présente mais qu'aucune information de trafic n'est présente.

3. Procédé selon l'une des revendications précédentes,
**caractérisé en ce que**
le mode de conduite automatisé du véhicule (1) n'est pas autorisé si une vitesse de conduite momentanée du véhicule (1) dépasse une limite supérieure de vitesse prédéfinie.

4. Procédé selon l'une des revendications précédentes,
**caractérisé en ce que**
le mode de conduite automatisé du véhicule (1) n'est pas autorisé si une vitesse de conduite momentanée du véhicule (1) est inférieure à une limite supérieure de vitesse prédéfinie, ladite limite supérieure de vitesse prédéfinie étant cependant atteinte en l'espace d'une durée pouvant être prédéfinie.

5. Procédé selon la revendication 3 ou 4,
**caractérisé en ce que**
dans le cas où un trafic s'écoule à une vitesse de conduite momentanée qui est inférieure à la limite supérieure de vitesse prédéfinie sur un tronçon de route (A) à plusieurs voies sur une voie de conduite (F1, F2) ou sur plusieurs voies de conduite (F1, F2), le véhicule (1) se positionne sur ladite voie de conduite (F1, F2) ou sur une desdites voies de conduite (F1, F2).

6. Procédé selon la revendication 5,
**caractérisé en ce que**
le véhicule (1) se positionne sur l'une des voies de conduite (F1, F2) sur laquelle le trafic s'écoule à une vitesse de conduite momentanée dont la différence avec la limite supérieure de vitesse est la plus faible.

7. Procédé selon l'une des revendications précédentes,
**caractérisé en ce que**
en cas d'une décision d'une non-autorisation du mode de conduite automatisé prise pendant le mode de conduite automatisé, une tâche de conduite est envoyée à un utilisateur de véhicule après une émission d'une invite de prise en charge.

8. Procédé selon l'une des revendications précédentes,
**caractérisé en ce que**
la non-autorisation du mode de conduite automatisé a pour conséquence que le mode de conduite automatisé est bloqué pour une activation, dans le cas où il est désactivé ou interrompu, et est bloqué pour une activation, dans le cas où il est activé.

9. Procédé selon l'une des revendications précédentes,
**caractérisé en ce que**
l'information d'événement se rapporte à un évènement qui représente un danger potentiel pour le véhicule (1) ou pour d'autres usagers du trafic.
